# EUROPÄISCHE PATENTANMELDUNG

(11) **EP 2 311 305 A1**
(43) Veröffentlichungstag der Anmeldung: **20.04.2011**
(21) Anmeldenummer: 10008284.1
(22) Anmeldetag: 09.08.2010
(51) Int. Cl.: A01D 34/86

(54) **Mäh- und/oder Schneidgerät mit zumindest einem Hydraulikantrieb eines Arbeitskopfes**

(30) Priorität: 10.08.2009 DE 102009036557
(71) Anmelder: Gerhard Dücker GmbH & Co. KG Landmaschinenfabrik, 48703 Stadtlohn (DE)
(72) Erfinder: Die Erfindernennung liegt noch nicht vor
(74) Vertreter: Busse, Harald F.W.

(57) **Zusammenfassung**

Ein Mäh- und/oder Schneid- oder ähnliches Arbeitsgerät (1) mit zumindest einem Arbeitskopf (3), der eine oder mehrere drehbare Welle(n) (6) mit über die Drehbewegung rotierbaren Schneid- oder Schlag- oder sonstigen Bearbeitungsmitteln (5) aufweist, wobei die oder jede Welle (6) mittels zumindest eines Hydraulikantriebs (7) drehbar ist, wird so ausgebildet, das der Hydraulikantrieb (7) einen vollständig innerhalb der Welle (6) angeordneten Motor (8) umfaßt (Fig. 7).

## Beschreibung

Die Erfindung betrifft ein Mäh- und/oder Schneid- oder ähnliche Arbeitsgerät mit zumindest einem Arbeitskopf, der eine oder mehrere drehbare Welle(n) mit über die Drehbewegung rotierbaren Schneid- oder Schlag- oder sonstigen Bearbeitungsmitteln aufweist, wobei die oder jede Welle mittels zumindest eines Hydraulikantriebs drehbar ist, nach dem Oberbegriff des Anspruchs 1.

Es ist bekannt, derartige Fahrzeuge mit in festem oder in einstellbarem Abstand zum Fahrzeug und teilweise neben, vor und/oder hinter dem Fahrzeug wirksamen Arbeitsköpfen zu verwenden, um damit beispielsweise Grasmäharbeiten neben der Straße mit rotierenden Schneid- oder Schlagmitteln, Hecken-und Buschwerkschneidarbeiten, Reinigungsarbeiten mit rotierenden Bürsten oder Fräsen oder ähnliche Arbeiten durchführen zu können, Solche Arbeitsköpfc können mit einer oder mehreren drehbaren Welle(n) versehen sein, die außenseitig zum Beispiel mit Schneid- oder Schlagmitteln, Borsten oder ähnliche Bearbeitungsmitteln versehen sind.

Es ist weiter bekannt, diese Welle, die häufig quer über die Breite des Arbeitskopfes erstreckt ist, mit Hilfe eines seitlich an dem Arbeitskopf angeordneten Hydraulikantriebs, zum Beispiel eines schrägscheibenmotors, drehen zu können. Ein solcher seitlicher Antrieb ragt jedoch seitlich weit aus dem Gehäuse des Arbeitskopfes heraus, so daß dieser Arbeitskopf im Betrieb einen erheblichen Querabstand zu Hindernissen, beispielsweise Leitpfosten, Leitplanken o. ä., einhalten muß. Das Arbeitsergebnis, zum Beispiel ein Mähbild, im Nahbereich dieser Hindernisae ist dadurch verschlechtert. Zudem kann es im Betrieb zu Verformungen der Welle kommen, beispielsweise bei Kontakt mit Steinen, die dann auf den genannten Antrieb durchschlägt und einen Austausch erforderlich macht.

Der Erfindung liegt das Problem zugrunde, eine Verbesserung des Drehantriebs für derartige Wellen zu erreichen.

Die Erfindung löst dieses Problem durch ein Mäh- und/oder Schneid- oder ähnliches Arbeitsgerät mit den Merkmalen des Anspruchs 1, des Anspruchs 3 oder des Anspruchs 8, deren Merkmale einzeln odor auch in Kombination miteinander verwirklicht sein können. Hinsichtlich weiterer Ausgestaltungen der Erfindung wird auf die abhängigen Ansprüche 2, 4 bis 7 und 9 bis 12 verwiesen.

Mit der Erfindung ist in der Ausbildung nach Anspruch 1 durch die Integration des Hydraulikantriebs in die Welle ein hohes Maß an Unempfindlichkeit gegen Störungen der Welle erreicht, Der Antrieb liegt geschützt, Zudem ist durch diese Integration der aus der Welle stirnsoitig herausragende Teil des Antriebs minimiert, so daß mit dem Arbeitskopf nah an ein Hindernis herangefahren werden kann.

Sofern gemäß der Ausbildung nach Anspruch 3 der Hydraulikmotor cinenends an einem beweglich gehaltenen Flansch abgestützt ist, ist die Stoß unempfindlichkeit des Motors besonders hoch. Auch ein äußercr Kontakt mit Hindernissen kann dann aufgrund der beweglichen Lagerung des Flansches nicht zu einem Durchschlagen in den Hydraulikmotor führen.

Insbesondere sind diese Lager elastisch, wie etwa durch Gummilager ermöglicht.

Weiterhin ist es besonders günstig, wenn der Hydraulikmotor außerhalb seiner Anbindung an den Flansch und der Verbindung seiner Antriebswelle über eine Kupplung zu der zu drehenden Welle frei von Verbindungen zur Welle in dieser gehalten ist. Eine direkte Übertragung von außen auf die Welle einwirkenden Störungen auf den Hydraulikmotor ist dadurch über den gesamten Motorverlauf verhindert.

Insbesondere ist dabei der Hydraulikmotor in einem Gehäuse gehalten, das über seinen Verlauf mit einem radialen Abstand von zumindest fünf Millimetern zur drehbaren Welle gehalten ist, Selbst bei einer leichten Deformation der Welle blieben damit der Motor und dessen Antriebswelle unbeschädigt und in ihrer Funktion unbeeinträchtigt.

Wenn gemäß Anspruch 8 der Hydraulikantrieb einen Hydraulikmotor umfaßt, der an einem Flansch an einer äußeren Wandung in Verlängerung der Welle gehalten ist, wobei der Flansch weniger als acht Zentimeter über die äußere Wandung des Arbeitskopfes hinausragt, kann mit dem Arbeitskopf seitlich dicht an ein Hindernis herangefahren werden. Insbesondere ragt der Flansch weniger als fünf Zentimeter über die äußere Wandung des Arbeitskopfes hinaus.

Die Montage ist vereinfacht, wenn der Flansch ein Anschlußflansch mit integrierten Anschlüssen für Zu- und Rücklauf sowie ggf. eine Leckleitung von Hydraulikmittel ist. Die gesamte Antriebseinheit kann dann modular vormontiert werden und mit dem Arbeitskopf, und der bereits gelagerten Welle verbunden werden, indem der Antrieb vollständig seitlich in die Welle und die darin gehaltene Kupplung eingeschoben und mit dem Flansch von außen festgelegt wird. Auch ein einzelner Austausch des Hydraulikantriebs ist ohne Demontage der Welle möglich.

Die Hydraulikanschlüsse können lotrecht zur drehbaren Welle stehen, so daß auch für die Anschlüsse die Breite des Flansches nicht vergrößerte sein muß.

Die Unempfindlichkeit der Welle und des Antriebs gegen äußere Einflüsse sind weiterhin besonders vorteilhaft dadurch verbessert, daß die drehbare Welle unabhängig vom Hydraulikantrieb an dem Gehäuse des Arbeitskopfes gelagert ist.

Die drehbare Welle kann insbesondere einen großen Außendurchmesser von zumindest 150 Millimetern aufweisen.

Weitere Vorteile und Merkmale der Erfindung ergeben sich aus einem in der Zeichnung dargestellten und nachfolgend bcschriebenen Ausführungsbeispiel des Gegenstandes der Erfindung.

In der Zeichnung zeigt:
- Fig. 1: eine schematische Draufsicht auf ein erfindungsgemäß ausgebildetes Mäh- und/oder Schneidgerät mit hier genau einem im Betrieb ausgreifenden Arbeitskopf, der mit einem integrierten Hydraulikantrieb versehen ist und seitlich außen am Gehäuse nur einen schmalen Anschlußflansch für diesen trägt,
- Fig. 2: eine ähnliche Ansicht wie Fig. 1, jedoch mit einer Ansicht eines Mäh- und/oder Schnexdgexät gemäß dem Stand der Technik mit seinem Arbeitskopf, der mit einen seitlich deutlich herausragenden Hydraulikantrieb versehen ist und dadurch von einem Hindernis einen großen Seitenabstand einhalten muß,
- Fig. 3: eine vergrößerte Einzelteildaxstelluxag eine,9 erfindungs- gemäßen Arbeitskopfes; in Draufsicht ähnlich wie in Fig. 1,
- Fig. 4: eine vergrößerte Einzelteildarstellung eines seitlichen Flansches zur Abstützung des Hydraulikmotors, etwa entsprechend einer Ansicht aus Richtung des Pfeils IV in Fig. 3,
- Fig. 5: eine stirnseitige Ansicht des Arbeitskopfes nach Fig, 3 mit daran anmontiertem seitlichem Flansch nach Figur 4,
- Fig. 6: die Baueinheit nach Figur 5 in schematischer Ansicht von unten,
- Fig. 7: eine perspektivische Ansicht des an einer vertikalen Ebene aufgeschnittenen Arbeitskopfes von schräg hinten mit darin angeordnetem Hydraulikantrieb,
- Fig. 8: einen vergrößerten Ausschnitt aus Figur 7, etwa entsprechend dem Detail VIII,

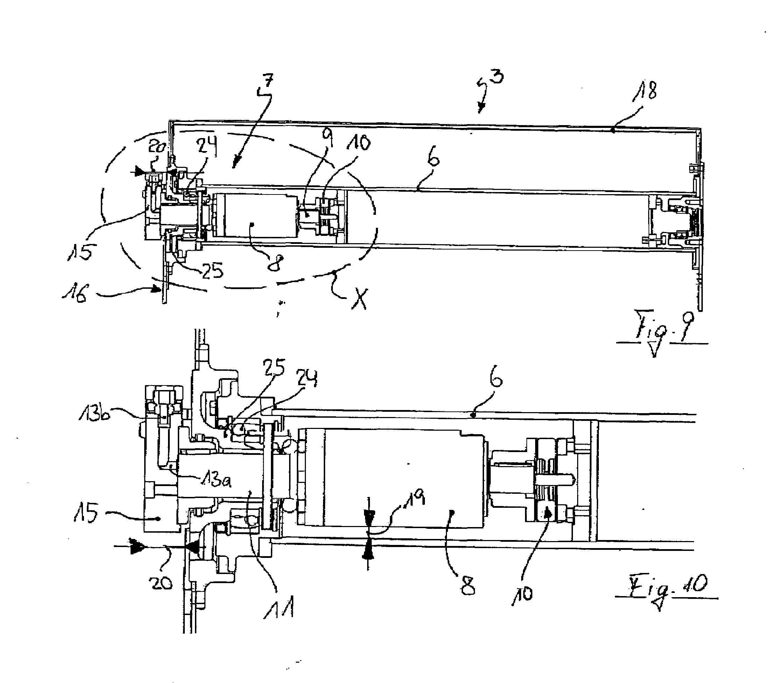

- Fig. 9: die an der vertikalen, über den Verlauf der Welle erstreckten Ebene aufgeschnittene Baueinheit in Ansicht von hinten,
- Fig. 10: einen vergrößerten Ausschnitt aus Figur 9, etwa entsprechend dem Detail X,
- Fig. 11: den als Einheit in die Welle einsetzbaren Hydraulikmotor in herausgezeichneter Einzelteildarstellung vor seiner Montage, versehen mit einer Verdrehsicherung in seinem Anschlußbereich zum seitlichen Flansch.

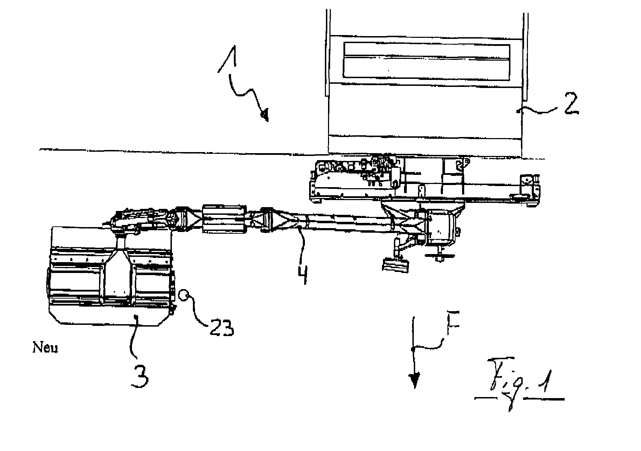

Das in Figur 1 dargestellte und insgesamt mit 1 bezeichnete Mäh-und/oder Schneidgerät umfaßt ein hier selbstfahrendes Fahrzeug 2, was nicht zwingend ist, und hier einen - auch mehrere sind möglich - Arbeitskopf 3, der gemäß der Zeichnung über einen variablen Ausleger 4 am Fahrzeug 2 gehalten ist. Das Fahrzeug 2 kann als Schmalspurtraktor ausgebildet sein, um damit einen flexiblen Einsatz auch in engen Bereichen zu ermöglichen. Auch größere, LXW-ähnliche Fahrzeuge sind möglich,

Gemäß der Darstellung nach Figur 1 ist die Fahrtrichtung F nach unten gerichtet, so daß dort der Arbeitskopf 3 schräg vor dem Fahrzeug 2 im Sichtfeld des Fahrers arbeitet.

Der Ausleger 4 mit dem Arbeitskopf 3 kann jedoch unterschiedlich, zum Beispiel front- oder heckseitig, montiert sein und in einer Transportstellung zum Beispiel vorne oder hinten am Fahrzeug 2 oder auch auf seiner Ladefläche halterbar sein. Der zumindest eine Ausleger 4 kann zudem höhen- und winkelverstellbar sein; auch eine teleskopische Ausbildung zur Längenverstellung ist möglich. Zudem kann er querverschieblich an einem fahrzeugfesten Querträger montiert sein.

Ebenso ist es möglich, daß der Arbeitskopf 3 mit einem festen Abstand zum Fahrzeug 2 gehalten ist und auch selbst Bestandteil des Fahrzeugs 2, etwa auch eines Anhängers, sein kann.

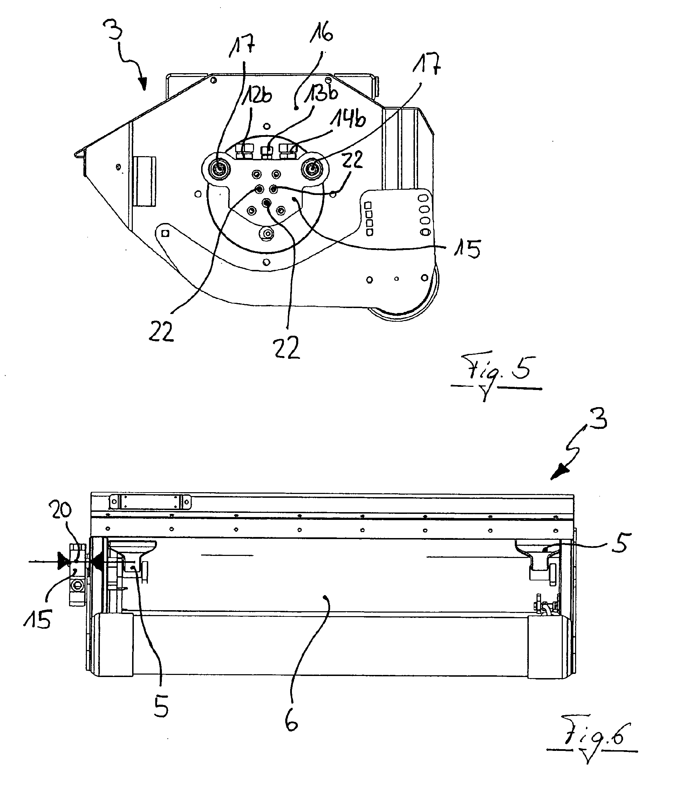

Der Arbeitskopf 3 kann beispielsweise als Mräh-, Schneid- oder Fräskopf oder als Räum- oder Reinigungskopf ausgebildet sein. Gemäß dem Beispiel nach Figur 1 ist der Arbeitskopf 3 als Mähkopf ausgebildet und mit Schneid- und/oder Schlagmitteln 5 am Außenumfang einer horizontal rotierbaren Welle 6 versehen, wie in Figur 6 nur schematisch an den axial äußeren Randbereichen angedeutet ist. Auch mehrere rotierbare Wellen, zum Beispiel neben- undiodez hintereinander, könnten vorgesehen sein.

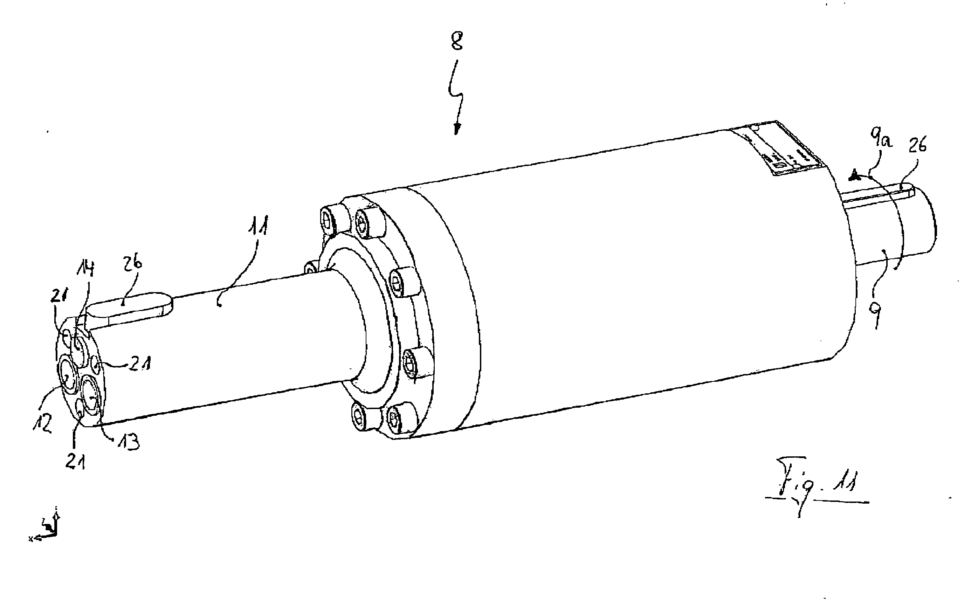

Die oder jede Welle 6 ist mit Hilfe zumindest eines insgesamt mit 7 bezeichneten Hydraulikantriebs drehbar. Dieser Hydraulikantrieb 7 umfaßt einen in Figur 11 herausgezeichneten und gemäß der Zeichnung vollständig innerhalb der Hohlwelle 6 angeordneten Motor 8, Der Motor 8 ist dabei gedichtet gegen Staub und ähnliches in der Welle 6 gelegen.

Dieser Motor 8 umfaßt eine in Richtung des Pfeils 9a rotierbare Antriebswelle 9, die bei Montage des Motors 8 in der Welle 6 in eine dort angeordnete Kupplung 10 kraft- oder formschlüssig eingeführt wird. Die Kupplung 10 ist fest mit der äußeren Welle 6 verbunden und kann dadurch das Drehmoment der Antriebswelle 9 auf die mit den Schneid- oder Schlagmitteln 5 besetzto Hohlwelle 6 übertragen. Am axial der Kupplung 10 gegenuberliegenden Ende umfaßt der Motor 8 einen starren, schaftartlgen Leitungsbereich 11, in dem eine Zuleitung 12 und eine Rückleitung 13 für Hydra.u-likfluid sowie eine Leitung 14 für Leckfluid angeordnet sind, die in im wesentlichen axialer Richtung bis zu einem in Verlängerung der Welle 6 montierbaren Flansch 15 an einer stirnseitigen Wandung 16 des Arbeitskopfes 3 verlaufen, so daß dort ein direkter Übergang in die festen Leitungen 12, 13, 14 an eingefrästen Kanälen 12a, 13a, 14a des Flansches 15 ohne Zwischenschaltung flexibler Bereiche geschaffen werden kann. Der Schaft 11 ist zur Montageerleichterung mit einer Verdrehsicherung 26 versehen, ebenso wie am axial anderen Ende des Motors 8 die Motorwelle 9 zur Erleichterung des Eingriffs in die Kupplung 10,

Um den festen und unbeweglichen Halt des Motors 8 am Flansch 15 zu ermöglichen, sind hier beispielsweise am axialen Ende des Leitungsbereichs 11 drei Sackbohrungen 21 vorgesehen, in die den Flansch 15 in Durchgangsbohrungen 21a durchgreifende Bolzen 22 als Haltemittel eingreifen können.

Damit ist der Hydraulikmotor 8 einenends über seine die Antriebskraft vermittelnde Motorwelle 9 und die Kupplung 10 mit der äußeren Welle 6 verbunden, so daß er deren Drehbewegung antreiben kann, anderenends ist der Motor 8 an einem gegenüber der Welle 6 beweglich gehaltenen - und dadurch in erster Näherung gehäusefesten - Flansch 15 abgestützt. Dieser Flansch 15 ist nicht mitdrehend, sondern an einer atirnseitigen Wandung 16 des Arbeitskopfes 3 gehalten. Die Halterung erfolgt allerdings über elastische Lager 17, zum Beispiel Gummilager, mit denen der Flansch 15 gegenüber dem Gehäuse 18 des Arbeitskopfes 3 zum Ausgleich von Einflüssen auf die Welle 6 decrart beweglich ist, daß er schwingend um wenige Millimeter bis Zentimeter an der seitlichen Stirnwandung 16 angebunden ist.

Außerhalb der beiden genannten Anbindungen einerseits an den Flansch 15 und andererseits über seine Antriebswelle 9 und die Kupplung 10 zu der zu drehenden Welle 6 ist der Motor 8 idealerweise vollständig frei von Verbindungen zur Welle 6 in dieser gehalten. Der Motor 8 erfüllt so keine tragende Funktion für die Hohlwelle 6 und ist somit gegen Verschleiß und Überlastung gut geschützt. Hierzu tragen auch Dichtungen im axial seitlichen Bereich zum Schutz gegen Eindringen von Staub und öl bei.

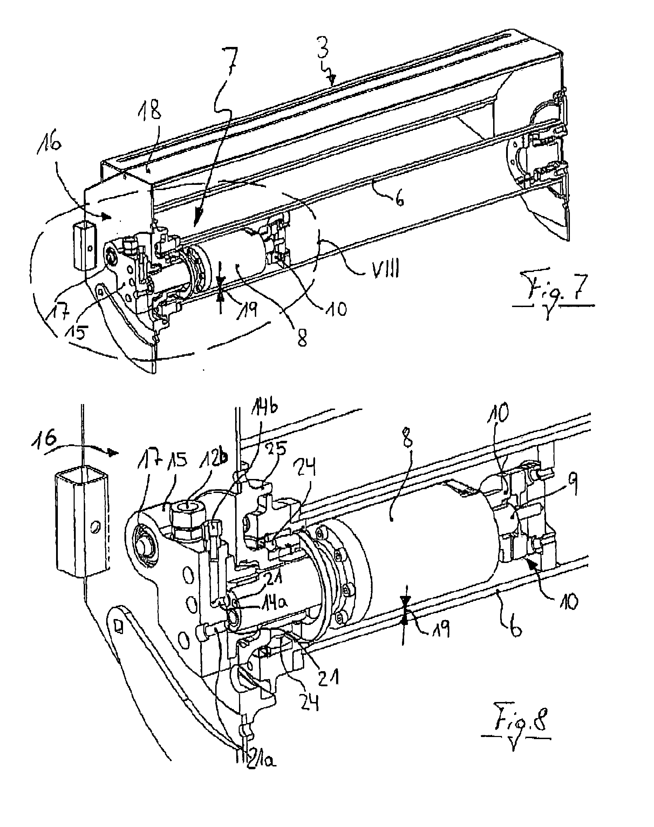

Die drehbare Welle 6 ist vollständig unabhängig vom Hydraulikantrieb 7 an dem Gehäuse 18 des Arbeitskopfes 3 gelagert. Hierfür dient eine stirnseitige Lagerschale 25, auf der die Welle 6 zum Beispiel über Kugellager 24 drehbar gelagert ist (Figur 8). Die Dichtung kann staubgeschützt und auf Lebenszeit geschmiert sein. Die Welle 6 kann zur Stabilitätsverbesserung einen erheblichen Außendurchmesser von mehr als 150 Millimetern aufweisen. Dabei ist sie mit einer hohen Sicherheit gegen äußere Deformationen über die gesamte Breite des Arbeitskopfes 3 erstreckt.

Einer äußeren Beeinflussung der Welle 6, die zu einer Deformation führen kann, kann der Motor 8 daher ohne eigene Beschädigung durch die Bewegun.gstolexanz in den Lagern 17 und der Kupplung 10 ausweichen,

Das Auswcich- und Toleranzausgleichspotential ist besonders groß, wenn der Hydraulikmotor 8 über seinen Verlauf mit eine radialen Abstand 19 (Figur 8) von zumindest fünf Millimeter zur zu drehenden Welle gehalten ist. Auch mögliche punktuelle Deformationen (Einbeulungen oder Knicke) der Hohlwelle 6 führen dann nicht zu einem Durchschlagen in den Motor 8.

Ein besonderer Vorteil der Erfindung liegt in der Verschmälerung der des außerhalb der Schneid- oder Schlagmittel 5 liegenden und daher nicht nutzbaren Außcnbereichs des Arbeitskopfes 3.

Der genannte Flansch 15, der den Motor 8 trägt und selbst über die elastischen Lager 17 an einer äußeren Wandung 16 in axialer Verlängerung der Welle 6 gehalten ist, ragt seitlich (Querabstand 20) weniger als acht Zentimeter über die äußere Wandung 16 des Arbeitskopfes 3 hinaus (Figur 6), insbesondere weniger als ungefähr fünf Zentimeter,

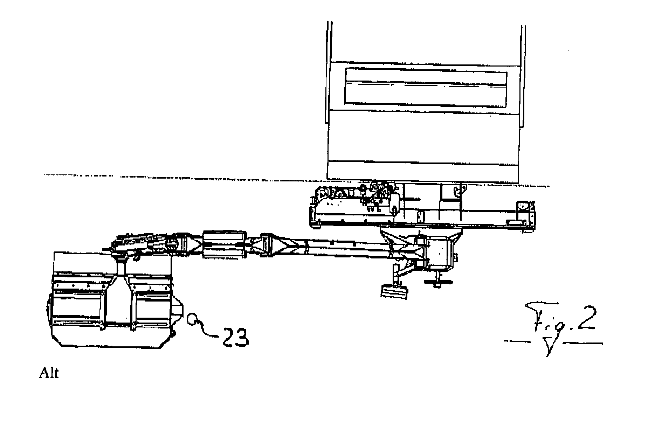

Dadurch kann, wie im Vergleich der Draufsicht der Erfindung nach Figur 1 zum Stand der Technik nach Figur 2 deutlich wird, der Arbeitskopf seitlich erheblich näher an ein Hindernis 23 herangeführt werden, so daß dort das Mällbild oder eine andere Bearbeitung erheblich verbessert ist.

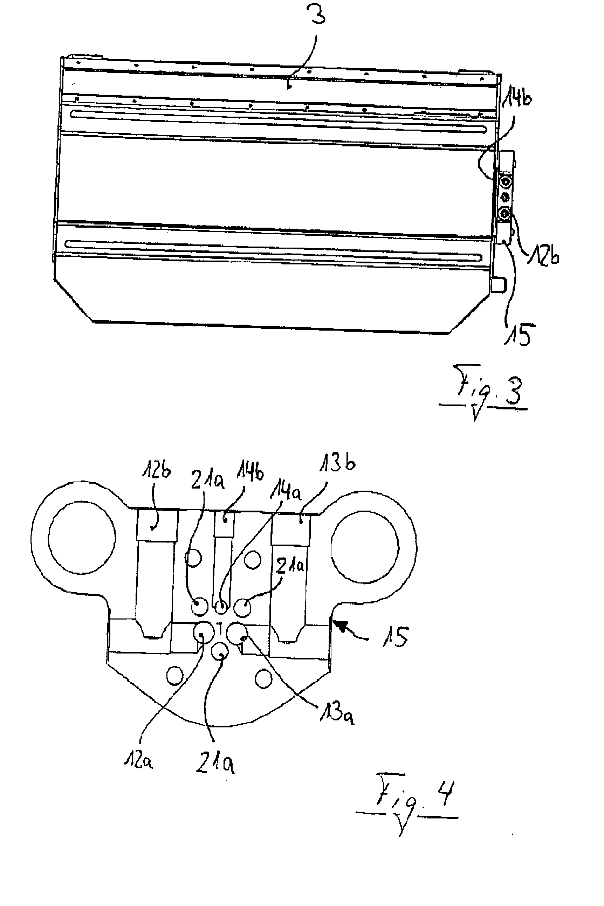

Wie etwa in Figur 4 deutlich wird, bildet der Flansch 15, um derart schmal ausgebildet sein zu können, einen Anschlußflansch mit integrierten Anschlüssen 12a, 13a, 14a und 12b, 13b, 14b für Zu-und Rücklauf und eine Leckleitung für Hydraulikmittel aus, Die Anschlüsse 12a, 13a und 14a münden in montierter Stellung direkt in die starren Leitungen 12, 13, 14 (Figur 11) des Motors 8 ein, der dann starr und unbeweglich an den Flansch 15 über die Bolzen 22 angebunden ist. Die Anschlüsse 12b, 13b, 14b sind hier als ausgefräste Kanäle im Flansch 15 gebildet und von den Anschlüssen 12a, 13a, 14a derart abgewinkelt, daß die Anschlüsse 12b, 13b, 14b lotrecht zur Welle 6 und somit parallel zur seitlichen Stirnwand 16 stehen. Hier kommen die Anschlüsse vertikal von oben. Auch diese Anordnung der Anschlüsse 12b, 13b, 1.4b führt daher nicht zu einer breiteren. Ausbildung des Flansches 15 als unbedingt nötig, so daß der geschilderte Vorteil der engen Vorbeiführu,ng des Arbeitskopfes 3 an Hindernissen 23 voll zum Tragen kommt. Zudem liegen die Kanäle 12a, 13a, 14a, 12b, 13b, 14b im Flansch vor mechanische Beschädigung - wie auch der Motor 8 - gut geschützt, so daß sich eine lange Lebensdauer mit einer verringerten Warturigsanfälligkeit crgibt.

### Bezugszeichenliste:

- 1: Mäh- und/oder Schneidgerät,
- 2: Fahrzeug,
- 3: Arbeitskopf,
- 4: Ausleger,
- 5: Schneid- oder Schlagmittel,
- 6: Welle,
- 7: Hydraulikantrieb,
- 8: Motor,
- 9: Antriebswelle,
- 10: Kupplung,
- 11: Leitungsbereich,
- 12: Zuleitung,
- 13: Rückleitung,
- 14: Leckleitung,
- 15: Flansch,
- 16: stirnseitige Wandung,
- 17: Lager,
- 18: Gehäuse,
- 19: radialer Abstand,
- 20: Querabstand,
- 21 1: Sackbohrungen,
- 21a: Durchgangsbohrungen,
- 22: Bolzen,
- 23: Hindernis,
- 24: Kugellager,
- 25: Lagerschale,
- 26: Verdrehsicherung,

- F: Fahrtrichtung

## Patentansprüche

1. Mäh- und/oder Schneid- oder ähnliches Arbeitsgerät (1) mit zumindest einem Arbeitskopf (3), der eine oder mehrere drehbare Wclle(n) (6) mit über die Drehbewegung rotierbaren Schneid- oder Schlag- oder sonstigen Bearbeitungsmitteln (5) aufweist, wobei die oder jede Welle (6) mittels zumindest eines Hydraulikantriebs (7) drehbar ist,
**dadurch gekennzeichnet,**
**daß** des Hydraulikantrieb (7) einen vollständig innerhalb der Welle (6) angeordneten Motor (8) umfaßt.

2. Mäh- und/oder Schneid- oder ähnliches Arbeitsgerät (1) nach Anspruch 1,
**dadurch gekennzeichnet,**
**daß** der der Hydraulikantrieb (7) einen starren Leitungsbereich (11) umfaßt, in dem eine Zuleitung (12) und eine Rückleitung (13) für Hydraulikfluid sowie eine Leitung (14) für Leckfluid in im wesentlichen axialer Richtung bis zu einem in Verlängerung der Welle (6) liegenden Flansch (15) an einer stirnseitige Wandung (16) des Arbeitskopfes (3) verlaufen.

3. Mäh- und/oder Schneid- oder ähnliches Arbeitsgerät (1) mit zumindest einem Arbeitskopf (3), der eine oder mehrere drehbare Welle(n) (6) mit über die Drehbewegung rotierbaren Schneid- oder Schlag- oder sonstigen Bearbeitungsmitteln (5) aufweist, wobei die oder jede Welle (6) mittels zumindest eines Hydraulikantriebs (7) drehbar lst, insbesondere nach einem der Ansprüche 1 oder 2,
**dadurch gekennzeichnet,**
**daß** der Hydraulikantrieb (7) einen Hydraulikmotor (8) umfaßt, von dem einenends über eine Motorwelle (9) die Welle (6) des Arbeitskopfes (3) von innen antreibbar ist und der anderenends an einem gegenüber der Welle (6) beweglich gehaltenen Flansch (15) abgestützt ist,

4. Mäh- und/oder Schneid- oder ähnliches Arbeitsgerät (1) nach Anspruch 3,
**dadurch gekennzeichnet,**
**daß** der Flansch (15) über elastisch Lager (17) an einem Gehäuse (18) des Arbeitskopfes (3) angebunden ist.

5. Mäh- und / oder Schneid- oder ähnliches Arbeitsgerät (1) nach einem der Ansprüche 3 oder 4,
**dadurch gekennzeichnet,**
**daß** der Flansch (15) an einer seitlichen Stirnwandung (16) des Gehäuse (18) beweglich angebunden ist.

6. Mäh- und/oder schneid- oder ähnliches Arbeitsgerät (1) nach einem den Ansprüche 3 bis 5,
**dadurch gekennzeichnet,**
**daß** der Hydraulikmotor (8) außerhalb seiner Anbindung an den Flansch (15) und der Verbindung seiner Antriebswelle (9) über eine Kupplung (10) zu der zu drehenden Welle (6) frei von Verbindungen zur Welle (6) in dieser gehalten ist.

7. Mäh- und/oder Schneid- oder ähnliches Arbeitsgerät (1) nach Anspruch 6,
**dadurch gekennzeichnet,**
**daß** der Hydraulikmotor (8) über seinen Verlauf mit einem radialen Abstand (19) von zumindest fünf Millimetern zur zu drehenden Welle (6) gehalten ist.

8. Mäh- und/oder Schneid- oder ähnliches Arbeitsgerät (1) mit zumindest einem Arbeitskopf (3), der eine oder mehrere drehbare Welle(n) (6) mit über die Drehbewegung rotierbaren Schneid- oder Schlag- oder sonstigen Bearbeitungsmitteln (5) aufweist, wobei die oder jede Welle (6) mittels zumindest eines Hydraulikantriebs (7) drehbar ist, insbesondere nach einem der Ansprüche 1 bis 7,
**dadurch gekennzeichnete**
**daß** der Hydraulikantrieb (7) einen Hydraulikmotor (8) umfaßt, der an einem Flansch (15) an einer äußeren Wandung (16) in Verlängerung der Welle (6) gehalten ist, wobei der Flansch weniger als acht Zentimeter über die äußere Wandung (16) des Arbeitskopfes (3) hinausragt (20).

9. Mäh- und/oder Schneidgerät (1) nach Anspruch 8,
**dadurch gekennzeichnet,**
**daß** der Flansch weniger als fünf Zentimeter über die äußere Wandung des Arbeitskopfes hinausragt.

10. Mäh- und/oder Schneidgerät (1) nach einem, der Ansprüche 1 bis 9,
**dadurch gekennzeichnet,**
**daß** der Flansch (15) ein Anschlußflansch mit integrierten Anschlüsse (12a;13a;14&;12b;13b;14b) für Zu- und Rücklauf von Hydraulikmittel ist.

11. Mäh- und/oder Schneidgerät (1) nach einem der Ansprüche 1 bis 10,
**dadurch, gekennzeichnet,**
**daß** die drehbare Welle (6) unabhängig vom Hydraulikantrieb (7) an dem Gehäuse (18) des Arbeitskopfes (3) gelagert (24,25) ist.

12. Mäh- und/oder Schneidgerät (1) nach einem der Ansprüche 1 bis 11,
**dadurch gekennzeichnet,**
**daß** die drehbare Welle (6) über die gesamte Innenbreite des Arbeitskopfes (3) erstreckt ist und einen Außendurchmesser von zumindest 150 Millimetern aufweist.
